# EUROPÄISCHE PATENTSCHRIFT

(11) **EP 1 250 796 B1**
(45) Veröffentlichungstag und Bekanntmachung des Hinweises auf die Patenterteilung: **09.11.2005**
(21) Anmeldenummer: 00991634.7
(22) Anmeldetag: 22.12.2000
(51) Int. Cl.: H04M 3/42, G01S 5/00, H04Q 3/00

(54) **VERFAHREN ZUR LOKALITÄTSINFORMATIONBEREITSTELLUNG UND -VERARBEITUNG IN VERMITTELTEN NETZEN**
METHOD FOR PROVIDING AND PROCESSING LOCALITY INFORMATION IN SWITCHED NETWORKS
PROCEDE POUR LA MISE A DISPOSITION ET LE TRAITEMENT D'INFORMATIONS DE LOCALITE DANS DES RESEAUX COMMUTES

(30) Priorität: 12.01.2000 DE 10000888
(43) Veröffentlichungstag der Anmeldung: 23.10.2002
(73) Patentinhaber: Deutsche Telekom AG, 53113 Bonn (DE)
(72) Erfinder: HERZOG, Uwe, 69124 Heidelberg (DE); DASSOW, Heiko, 64347 Griesheim (DE); ZEFFLER, Klaus-Peter, 64297 Darmstadt (DE)
(86) Internationale Anmeldenummer: PCT/EP2000/013213
(87) Internationale Veröffentlichungsnummer: WO 2001/052562

(56) Entgegenhaltungen:
- WO-A-98/10538

## Beschreibung

Die Erfindung betrifft ein Verfahren zur Lokalitätsinformationsbereitstellung und -verarbeitung in vermittelten Netzen nach dem Oberbegriff des Patentanspruchs 1.

In der Vermittlungstechnik sind Verfahren und Architekturen bekannt, um einen Ruf in einem verbindungsorientierten Netz in Abhängigkeit von seinem Ursprung zu vermitteln, wie es in der ITU-T Veröffentlichung Q1221 (09,97) unter dem Titel "Introduction to Intelligent Network Capability Set 2" beschrieben ist. Die für dieses Verfahren verwendete Positionsangabe besteht dabei ausschließlich aus der aktuellen Relation des Teilnehmers innerhalb eines strukturierten Vermittlungsnetzes. So kann beispielsweise eine Notrufnummer im Netz so konfiguriert werden, daß der Ruf an eine für das Ortsnetz zuständige Meldezentrale weitergeleitet wird.

Es sind auch Verfahren bekannt, in denen eine geographische Ortsangabe nach erfolgter Durchschaltung vom Endgerät zu einem Server beim Zielteilnehmer übertragen wird, wie zum Beispiel der ADAC-Notruf Kit, um beispielsweise im Falle eines Unfalls oder einer Panne ein schnelles Auffinden eines Fahrzeuges zu erleichtern.

In Veröffentlichungen der PARLAY Group, wie zum Beispiel der Parlay News Page vom 22.10.99 und der Press Release vom
15.6.99 und der Veröffentlichung "Parlay API-Business Benefits White Paper" vom 11.6.99 wird über die Bereitstellung von Informationen hinsichtlich des Aufenthaltsortes des Anrufers an ein die Dienstlogik realisierendes Programm zur Durchschaltung zum Zielteilnehmer beschrieben, insbesondere für Anrufe aus Mobilfunknetzen oder dem Internet. Lokalitätsinformationen können zum Beispiel mittels des Global Positioning System (GPS) gewonnen und an die Dienstlogik weitergeleitet werden.

Aus WO 98/10538 ist eine Einrichtung zur Lokalisierung von Mobilstationen innerhalb eines Mobilfunknetzes bekannt, die durch Auswertung der Signale verteilt angeordneter Basisstationen und einer ortsveränderlichen Schaltungsanordnung, einer schnellen Ortung des tatsächlichen Standortes der Mobilstation dienen soll. Dabei wird zusätzlich eine Einrichtung zur Lokalisierung des Senders/Empfängers benötigt, die die Messergebnisse der Basisstationen und der ortsveränderlichen Schaltungsanordnung mit dem Ziel der Feststellung des tatsächlichen Standortes möglich macht.

Eine solche Einrichtung und ein mit dieser ausgeführtes Verfahren kann nur dazu dienen, eine Mobilstation in Ausnahmesituationen direkt aufzufinden. Es ist dabei nicht beabsichtigt, Nutzer oder Nutzungsdaten dieser Mobilstation zu ermitteln.

Die Erfassung von Lokalitätsinformationen zu Zwecken statistischer Auswertung und dergleichen mit einer solchen Einrichtung ist wegen des technischen, Personal- und Kostenaufwandes nicht möglich.

Der Nachteil der derzeitigen ursprungsabhängigen Vermittlung von Verbindungen ist es, daß kein einheitliches und mit derzeitigen Netzarchitekturen kompatibles Verfahren zur Bereitstellung dieser Ortsinformationen existiert. Eine Anpassung und Modifikation der existierenden Signalisierungsprotokolle in den jeweiligen Netzen, wie zum Beispiel das Intelligent Network Application Protocol (INAP), das Mobile Application Protocol (MAP), das Camel Application Protocol (CAP), das Wireless Application Protocol (WAP) und gemäß dem ITU Standard das Protokoll zur Realisierung von DK Diensten in IP-Netzen (H.323) ist äußerst langwierig und schwierig und damit technisch aufwendig durchzuführen.

Der Erfindung liegt deshalb die Aufgabe zugrunde, ein Verfahren zur Bereitstellung und zur Verarbeitung von Lokalitätsinformationen in vermittelten Netzen zu schaffen, das Ortsinformationen aus verschiedensten Netzen, wie zum Beispiel dem Public Switched Telephone Network (PSTN), dem Integrated Service Digital Network (ISDN), dem Global System for Mobile Communication (GSM), dem Internet und anderen technisch äquivalenten Netzen auf einheitliche Art und Weise an die Dienstlogik bereitzustellen in der Lage ist und zwar ohne Modifikation existierender Signalisierungsprotokolle, wobei es außerdem möglich sein soll, unterschiedliche Netze mit unterschiedlichen Verfahren zur Bestimmung von Koordinaten zusammenzuschalten und einen netzübergreifenden Dienst zu realisieren.

Die erfindungsgemäße Lösung der Aufgabe besteht im Kennzeichen des Patentanspruchs 1.

Weitere Lösungen sind in den Kennzeichen der Patentansprüche 2 bis 11 charakterisiert.

Mit dem hier offenbarten Verfahren ist es möglich, auf eine einheitliche Art und Weise Lokalitätsinformationen aus unterschiedlichen Netzen, das heißt mit unterschiedlicher Art und Technologie, an die für die Realisierung des Telekommunikationsdienstes verantwortliche Dienstlogik weiterzureichen.

Lokalitätsinformationen an sich erlauben, eine Verbindung in einem Netz aufgrund einer geographischen Positionsbestimmung des die Verbindung initiierenden Teilnehmers an unterschiedliche Ziele durchzuschalten.

Mit Hilfe des hier vorgeschlagenen einheitlichen Verfahrens zur Bereitstellung und Verarbeitung von Lokalitätsinformationen in vermittelten Netzen erfolgt die Bereitstellung der Positionsinformationen auf eine einheitliche Weise.

Eine Änderung existierender Protokolle zur Dienststeuerung ist nicht erforderlich. Außerdem können Positionsinformationen aus beliebigen Netzen bereitgestellt werden. Aufgrund der gewählten Architektur und der Trennung bei der Übertragung von Signalinformationen und der Übertragung von geographischen Koordinaten ist es besonders vereinfacht möglich, unterschiedliche Netze mit unterschiedlichen Verfahren zur Bestimmung von Koordinaten zusammenzuschalten und einen netzübergreifenden Dienst zu realisieren.

Die Genauigkeit der Ortsbestimmung kann abhängig vom gewählten Verfahren variieren. Sie kann basieren, zum Beispiel auf:
- Standort des Antennenmastes bzw. Sektormitte der Funkzelle in Mobilfunknetzen;
- exakte geographische Position durch Bestimmung mit Hilfe von GPS;
- Standort des Internet-Zugangsknotens, Firewalls u.s.w..

Die benötigten Positionsinformationen müssen an der entsprechenden Schnittstelle zur Dienstlogik bereitgestellt werden. Die Gewinnung der Positionsinformationen kann auf verschiedene Art und Weise erfolgen wie einige Beispiele zeigen sollen:
Bei Mobilfunknetzen - durch lokalen Managementzugang zur Antennenkonfiguration der Funkzelle des Anrufes;
- durch Übertragung der mittels GPS im Mobilfunkendgerät gewonnenen Informationen mit Hilfe existierender Protokolle, wie zum Beispiel WAP.

Im Festnetz
- durch Zugriff auf Daten zur Teilnehmeranschlussleitung beim jeweiligen Netzbetreiber, wie zum Beispiel bei der Deutschen Telekom, beschrieben in IV Anwendung KONTESS ORKA, ZIP/PR990521.SB.ORKA.002, um exakte Positionsbestimmung zu ermöglichen.

Im Internet
- durch Tracing-Funktionalitäten zur Rückverfolgung (Trace-Route), gegebenenfalls in Kombination mit Lageverzeichnis von Internetknoten.

Die Umwandlung der Roh-Ortsdaten in ein Format entsprechend der bereitzustellenden Syntax und Semantik kann in einem zentralen Server oder auch bereits vorher, zum Beispiel durch Vorverarbeitung, in den jeweiligen Ursprungsnetzen erfolgen.

Weitere Vorteile, Merkmale und Anwendungsmöglichkeiten der vorliegenden Erfindung, insbesondere des einheitlichen Verfahrens zur Bereitstellung und Verarbeitung von Lokalitätsinformationen in vermittelten Netzen, ergeben sich aus der nachfolgenden Beschreibung in Verbindung mit dem in der Zeichnung dargestellten Ausführungsbeispiel.

Die Erfindung wird im folgenden anhand eines in der Zeichnung dargestellten Ausführungsbeispiels näher beschrieben. In der Beschreibung, in den Patentansprüchen, der Zusammenfassung und in der Zeichnung werden die in der hinten angeführten Liste der Bezugszeichen verwendeten Begriffe und zugeordneten Bezugszeichen verwendet.

In der Zeichnung bedeuten:

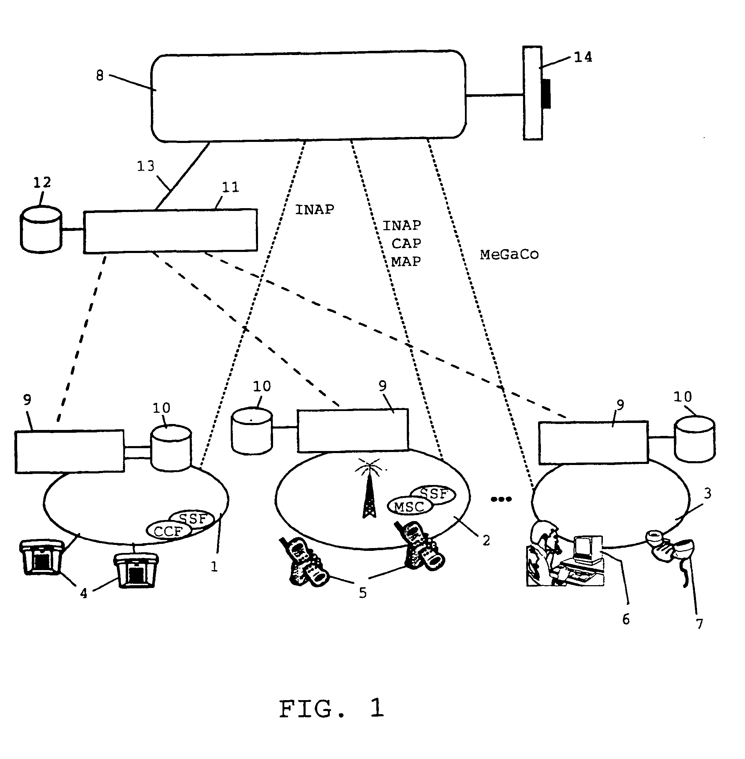

- Fig. 1: eine Darstellung einer prinzipiellen Netzarchitektur.

Die in der Fig. 1 dargestellte Netzarchitektur zeigt eine gemeinsame Service-Plattform 8, wie zum Beispiel INSCP, das heißt den Service-Kontrollpunkt SCP eines intelligenten Netzwerkes IN mit einem Application Programming Interface (API) 14 von zum Beispiel der PARLAY Group für das Festnetz 1 als Public Switched Telephone Network PSTN, einem Mobilfunknetz 2 und dem Internet 3. Die Netze 1 bis 3 stehen dabei mit jeweiligen Endgeräten, wie zum Beispiel Telefonen 4, Mobiltelefonen 5, Personalcomputern 6 und Kopplern 7 der jeweiligen Netze 1 bis 3 in Verbindung. Das Festnetz 1 verfügt über einen Service-Kontrollpunkt SCP und über eine Service Switching Function SSF. Das Mobilfunknetz 2 verfügt seinerseits über eine Service Switching.Function SSF und ein Mobile Switching Center MSC. Das Festnetz 1 ist über ein Intelligent Network Application Protocol INAP an die Service-Plattform 8 angeschlossen. Das Mobilfunknetz 2 ist über ein Intelligent Network Application Protocol INAP, ein Camel Application Protocol CAP und ein Mobile Application Protocol MAP an die Service-Plattform 8 angeschlossen. Das Internet 3 ist über bekannte Signalisierungs- bzw. Kontrollprotokolle wie MeGaCo oder andere angeschlossen.

Außerdem verfügt jedes der Netze 1 bis 3 über eine Vorverarbeitung 9 mit einer zugehörigen Datenbank 10, die alle mit einem Lokalitätsdatenserver 11 in Verbindung stehen, der eine eigene Datenbank 12 aufweist und über eine Verbindung 13 mit der Service-Plattform 8 in Verbindung steht.
Es ist zu beachten, daß das Ausführungsbeispiel in Fig. 1 lediglich einen Überblick über das beschriebene Szenario wiedergibt. Die Lokalitätsinformationen werden aus den hier beispielsweise drei dargestellten verschiedenen Netzen 1 bis 3 gewonnen und dem Lokalitätsdatenserver 11 mit zugeordneter Datenbank 12 bereitgestellt. Eine Modifikation existierender Signalisierungs- und Kontrollprogramme zum Zwecke der Lokalitätsdatenübertragung erfolgt dabei nicht. Gegebenenfalls können existierende Protokolle jedoch zur transparenten Übertragung von Lokalitätsdaten verwendet werden. Vorverarbeitung 9 und gegebenenfalls Zugriffe auf die Datenbanken 10 sind möglich. Die Dienstlogik befindet sich auf der Service-Plattform 8. Von dort kann sie auf den Lokalitätsdatenserver 11 und damit auf die gewünschten Lokalitätsdaten zugreifen. Die Anzahl und Art der an die Service-Plattform 8 angeschlossenen Netze, in diesem Beispiel Netze 1 bis 3, und deren Verknüpfung untereinander ist grundsätzlich unerheblich, da ohne weiteres andere Varianten ohne erfinderisches Zutun möglich sind. Das hier genannte Parlay Interface 14 kann selbstverständlich auch durch ein anderes entsprechendes Interface ersetzt werden und dient hier nur als Beispiel.

Die Bereitstellung von Ortsinformation des Anrufers durch das hier beschriebene einheitliche Verfahren zur Bereitstellung und Verarbeitung von Lokalitätsinformationen in vermittelten Netzen verbessert das Kosten/Nutzen-Verhältnis, die Effizienz, die Akzeptanz und die Verbreitung der Benutzung von Ortsinformationen für Telekommunikationsdienste wesentlich. Außerdem wird die Verfügbarkeit von Positionsinformationen über den Standort des Anrufers für eine Reihe von Diensten von grundlegender oder wichtiger ergänzender Bedeutung, zum Beispiel Routing entsprechend dem genauen Ursprung zum Finden des zuständigen Ansprechpartners, sofortige Kenntnis des Anruferstandortes zur schnellen Hilfeleistung, Warenlieferung an den Ort des Anrufes u.s.w., hiermit auf technisch zuverlässige und wirtschaftlich interessante Art und Weise gelöst.

### LISTE DER BEZUGSZEICHEN

- 1: Festnetz, zum Beispiel Public Switched Telephone Network
- 2: Mobilfunknetz
- 3: Internet
- 4: Telefonapparate
- 5: Mobiltelefone
- 6: Personalcomputer
- 7: Koppler
- 8: Service-Plattform, zum Beispiel IN-SCP
- 9: Vorverarbeitung
- 10: Datenbank (des jeweiligen Netzes 1 bis 3)
- 11: Lokalitätsdatenserver
- 12: Datenbank des Lokalitätsdatenservers 11
- 13: Verbindung zwischen Lokalitätsdatenserver und Service-Plattform
- 14: Interface, hier als PARLAY-Interface
- API: Application Programming Interface
- CAMEL: Customised Application for Mobile Enhanced service Logic
- CAP: CAMEL Application Protocol
- CCF: Call Control Function
- DB: Datenbank
- GPS: Global Positioning System
- GSM: Global System for mobile communications
- H.323: ITU-Standard: Protokoll zur Realisierung von TK-Diensten in IP-Netzen
- IN: Intelligent Networks
- INAP: Intelligent Network Application Protocol
- IP: Internet Protocol
- ISDN: Integrated Service Digital Network
- MAP: Mobile Application Protocol
- MeGaCo: Media Gateway Control protocol
- MSC: Mobile Switching Center
- PSTN: Public Switched Telephone Network
- SCP: Service Control Point
- SSF: Service Switching Function
- TK: Telekommunikation
- WAP: Wireless Application Protocol

## Patentansprüche

1. Verfahren zur Lokalitätsinformationsbereitstellung und -verarbeitung an der Schnittstelle der jeweiligen Dienstlogik von vermittelten Netzen, wie Festnetzen (1), Mobilfunknetzen (2), Internet (3) oder Netzen, die mit einer definierten Dienstlogik arbeiten, **dadurch gekennzeichnet, daß** die Lokalitätsinformationen aus verschiedenartigen oben genannten Netzen (1, 2 3) auf einheitliche Art und Weise der Dienstlogik bereitgestellt werden, indem ein netzspezifischer Lokalitätsdatenserver (11) aus den Rohortsdaten der Signalisierungsprotokolle einer auf einer Service-Plattform (8) befindlichen Dienstlogik aus den übertragenen netzspezifischen Informationen eines Rufenden die jeweils aktuellen Rohortsinformationen ermittelt und in die Lokalitätsinformation umwandelt, welche der Dienstlogik bereitgestellt werden.

2. Verfahren nach Patentanspruch 1, **dadurch gekennzeichnet,**
**daß** eine Auswertung der Lokalitätsinformationen **dadurch** erfolgt, daß eine Verbindung bei gleicher Zielrufnummer aufgrund der unterschiedlichen Lokalitätsinformationen an zu unterschiedlichen Kunden gehörenden Zielen vermittelt wird, indem über eine Datenbankabfrageoperation ermittelt wird, welcher Kunde das zugehörige Ziel für eine bestimmte Position ist.

3. Verfahren nach einem der Patentansprüche 1 und/oder 2, **dadurch gekennzeichnet,**
**daß** *zur Ermittlung von Lokalitätsinformationen als* Positionsbestimmung ein Online-Zugriff auf eine Datenbank (10) erfolgt und daß in den verschiedenartigen oben genannten Netzen zugeordnete Datenbanken (9) durch die jeweiligen Netze verwaltet werden.

4. Verfahren nach einem der Patentansprüche 1 bis 3, **dadurch gekennzeichnet,**
**daß** die Lokalitätsinformationen in Form von geographischen Koordinaten übertragen werden.

5. Verfahren nach einem der Patentansprüche 1 bis 3, **dadurch gekennzeichnet,**
**daß** die Lokalitätsinformationen in Form von Adressen, vorzugsweise durch Angaben zu Land, Stadt, Stadtteil, *wiederum vorzugsweise* zu Straße und Hausnummer, übertragen werden.

6. Verfahren nach einem der Patentansprüche 1 bis 5, **dadurch gekennzeichnet,**
**daß** die *Lokalitätsinformationen als* Positionsinformationen auch bei *einer* Schnittstelle (14) für externe Anwendungen bereitgestellt werden.

7. Verfahren nach einem der Patentansprüche 1 bis 6, **dadurch gekennzeichnet,**
**daß** bei Mobilfunknetzen (2) die *Lokalitätsinformationen als* Positionsinformationen an der entsprechenden Schnittstelle zur Dienstelogik durch einen lokalen Managementzugang zur Antennenkonfiguration der Funkzelle des Anrufers *ermittelt werden.*

8. Verfahren nach einem der Patentansprüche 1 bis 5, **dadurch gekennzeichnet,**
**daß** die *Lokalitätsinformationen als* Positionsinformationen an der entsprechenden Schnittstelle zur Dienstlogik durch Übertragung *von* mittels eines Global Positioning Systems, *vorzugsweise durch das GPS-System, in einem* Mobilfunkendgerät (5) gewonnenen Informationen mittels existierender Protokolle, *vorzugsweise durch das WAP,* bereitgestellt werden.

9. Verfahren nach einem der Patentansprüche 1 bis 5, **dadurch gekennzeichnet,**
**daß** bei Festnetzen (1) die *Lokalitätsinformationen als* Positionsinformationen an der entsprechenden Schnittstelle zur Dienstelogik durch Zugriff auf Daten zur Teilnehmeranschlußleitung beim jeweiligen Netzbetreiber zur exakten Positionsbestimmung bereitgestellt werden.

10. Verfahren nach einem der Patentansprüche 1 bis 5, **dadurch gekennzeichnet,**
**daß** bei Internet-Netzen (3) die benötigten Loka*litätsinformationen als* Positionsinformationen an der entsprechenden Schnittstelle zur Dienstelogik durch Tracing-Funktionalitäten zur Zurückverfolgung, *vorzugsweise durch* Kombination mit einem Lageverzeichnis von Internet-Knoten bereitgestellt werden.

11. Verfahren nach einem der Patentansprüche 1 bis 10, **dadurch gekennzeichnet,**
**daß** die Umwandlung von Roh-Ortsdaten in ein Format entsprechend der bereitzustellenden Syntax und Semantik **dadurch** erfolgt, daß diese in einem zentralen Server (11) oder bereits vorher in einer Vorverarbeitung (9) in den jeweiligen verschiedenartigen oben genannten Ursprungsnetzen erfolgt.

## Claims

1. Method for providing and processing location information at the interface of the applicable service logic of switched networks such as fixed networks (1), mobile telephone networks (2), Internet (3), or networks operating with a defined service logic, **characterized in that** the location information from different aforementioned networks (1, 2, 3) is provided to the service logic in a uniform manner **in that** a network-specific location data server (11) uses the raw location data from the network-specific information of a calling party transmitted in the signaling protocols of a service logic located on a service platform (8) to determine the applicable current raw location information and converts said raw location information into the location information provided to the service logic.

2. Method according to claim 1, **characterized in that** the location information is analyzed such that, for identical destination subscriber numbers, a connection is switched to destinations belonging to different customers on the basis of the different location information, **in that** a database query operation is used to determine which customer is the applicable destination for a specific position.

3. Method according to any one of claims 1 and/or 2, **characterized in that** online access to a database (10) takes place *to determine location information as* position assessment, and **in that** associated databases (9) within the different aforementioned networks are administered *through* the applicable networks.

4. Method according to any one of claims 1 through 3, **characterized in that** the location information is transmitted in the form of geographic coordinates.

5. Method according to any one of claims 1 through 3, **characterized in that** the location information is transmitted in the form of addresses, preferably by specifying state or province, city, municipal district, *and in turn preferably* street and house number.

6. Method according to any one of claims 1 through 5, **characterized in that** the *location information* is also provided *as* position information at *one* interface (14) for external applications.

7. Method according to any one of claims 1 through 6, **characterized in that**, in the case of mobile telephone networks (2), the *location information is determined as* position information at the applicable interface to the service logic through a local management access to the antenna configuration of the radio cell of the caller.

8. Method according to any one of claims 1 through 5, **characterized in that** the *location information* is provided *as* position information at the applicable interface to the service logic by transmission using existing protocols, *preferably WAP, of* information obtained *in a* mobile telephone terminal (5) by means of a Global Positioning System, *preferably by the GPS system.*

9. Method according to any one of claims 1 through 5, **characterized in that**, in the case of fixed networks (1), the *location information* is provided as position information at the applicable interface to the service logic through access to data regarding the subscriber connection at the corresponding network operator in order to precisely determine the position.

10. Method according to any one of claims 1 through 5, **characterized in that**, in the case of Internet networks (3), the required *location information* is provided *as* position information at the applicable interface to the service logic by means of tracing functionalities for back-tracing, *preferably by* combination with a location directory of Internet nodes.

11. Method according to any one of claims 1 through 10, **characterized in that** the conversion of raw location data into a format corresponding to the syntax and semantics to be provided is accomplished by the means that *said conversion* takes place in a central server (11), or even earlier in a preprocessing step (9), in the applicable different aforementioned networks of origin.

## Revendications

1. Procédé de fourniture et de traitement d'informations de localisation à l'interface de la logique de service de réseaux commutés, tels que réseaux fixes (1), réseaux mobiles (2), Internet (3) ou réseaux fonctionnant avec une logique de service définie, **caractérisé en ce que** les informations de localisation sont fournies à la logique de service de façon uniforme à partir de différents réseaux parmi ceux mentionnés (1, 2, 3), un serveur de localisation (11) d'un réseau spécifique recherchant, à partir des informations transmises, spécifiques du réseau, d'un appelant, et en se servant des données brutes de localisation des protocoles de signalisation d'une logique de service se trouvant sur une plate-forme de service (8), les informations brutes de localisation de dernière actualité, qu'il transforme en information de localisation, laquelle est mise à la disposition de la logique de service.

2. Procédé selon la revendication 1, **caractérisé en ce que** l'analyse des informations de localisation est effectuée de telle manière que, pour un même numéro de destination, une liaison est établie vers des destinations correspondant à des clients différents, du fait des différences entre les informations de localisation, le client correspondant à une position définie étant déterminé par consultation d'une banque de données.

3. Procédé selon l'une des revendications 1 et/ou 2,
**caractérisé en ce que**,
pour rechercher des informations de localisation pour détermination d'une position, il est accédé en ligne à une banque de données (10) et **en ce que** des banques de données (9) assignées dans les différents réseaux susmentionnés sont administrées par les réseaux correspondants.

4. Procédé selon l'une des revendications 1 à 3, **caractérisé en ce que**
les informations de localisation sont transmises sous forme de coordonnées géographiques.

5. Procédé selon l'une des revendications 1 à 3, **caractérisé en ce que**
les informations de localisation sont transmises sous forme d'adresses, de préférence en spécifiant le pays ou la province, la ville et le quartier et, à nouveau de préférence, la rue et le numéro de rue.

6. Procédé selon l'une des revendications 1 à 5, **caractérisé en ce que**
les informations de localisation sont fournies comme informations de position également pour une interface (14) pour des applications externes.

7. Procédé selon l'une des revendications 1 à 6, **caractérisé en ce que**
pour les réseaux mobiles (2), les informations de localisation sont déterminées comme informations de position à l'interface correspondante avec la logique de service, par un accès de gestion local à la configuration d'antenne de la cellule radioélectrique de l'appelant.

8. Procédé selon l'une des revendications 1 à 5, **caractérisé en ce que**
les informations de localisation sont fournies comme informations de position à l'interface correspondante avec la logique de service, par transmission d'informations obtenues sur un terminal mobile (5) à l'aide d'un Global Positioning System, de préférence le système GPS, en ayant recours à des protocoles existants, de préférence le WAP.

9. Procédé selon l'une des revendications 1 à 5, **caractérisé en ce que**
pour les réseaux fixes (1), les informations de localisation sont fournies pour détermination exacte de position comme informations de position à l'interface correspondante avec la logique de service, en ayant recours à des données de l'opérateur de réseau sur la ligne de raccordement d'abonné.

10. pour les réseaux Internet (3), les informations nécessaires de localisation sont fournies comme informations de position à l'interface correspondante avec la logique de service, par des fonctionnalités de *tracing* pour reconstitution, de préférence en combinaison avec une liste de sites des noeuds Internet.

11. Procédé selon l'une des revendications 1 à 10,
**caractérisé en ce que**
la conversion de données brutes de localisation en un format correspondant à la syntaxe et à la sémantique à fournir a lieu dans un serveur central (11) ou préalablement dans une phase de prétraitement (9) dans les réseaux d'origine correspondants susmentionnés.
